# EUROPEAN PATENT APPLICATION

(11) **EP 3 988 223 A1**
(43) Date of publication of application: **27.04.2022**
(21) Application number: 20832288.3
(22) Date of filing: 23.06.2020
(51) Int. Cl.: B09B 3/00, A23K 10/16, A23K 40/00, A23K 30/20, A61L 2/04, A61L 11/00

(54) **FOOD WASTE TREATMENT METHOD USING DIGESTIVE ENZYME**

(30) Priority: 24.06.2019 KR 20190075164
(71) Applicant: Lee, Gil Woo, Heungdeok-gu Cheongju-si, Chungcheongbuk-do 28400 (KR)
(72) Inventor: Lee, Gil Woo, Heungdeok-gu Cheongju-si, Chungcheongbuk-do 28400 (KR)
(74) Representative: Pons
(86) International application number: PCT/KR2020/008174
(87) International publication number: WO 2020/262943

(57) **Abstract**

The present invention relates to a method for treating food waste using digestive enzymes. Specifically, it is an invention related to a method for treatment of food waste using digestive enzymes, in which food waste is enzymatically decomposed and then concentrated by adding a composite formulation comprising amylase, protease, viscozyme, alkylase and fungamyl enzyme, and the like and heat-treating, to make it possible to make animal feeds and fertilizers close to natural.

The method for treatment of food waste according to the present invention can rapidly process large-capacity food waste. In addition, the yield of food waste treatment is high, odor is reduced, and treated food waste which may only be used as compost, has an excellent effect that it can be used as animal feed by adding an auxiliary solvent.

## Description

### TECHNICAL FIELD

The present invention relates to a method for treating food waste using digestive enzymes. Specifically, it is an invention related to a method for treatment of food waste using digestive enzymes, in which food waste is enzymatically decomposed and then concentrated by adding a composite formulation comprising amylase, protease, viscozyme, alkylase and fungamyl enzyme, and the like and heat-treating, to make it possible to make animal feeds and fertilizers close to natural.

### [BACKGROUND ART]

Currently, as food waste increases, it is emerging as a big problem for each local government. Food waste has a strong odor and leachate is not biodegradable, so it is impossible to treat it by existing treatment methods, and therefore, most of the food waste is treated by consignment, and even when it is consigned, it is treated using ocean dumping or a sewage terminal plant, but recently, ocean dumping has been completely blocked and thus its treatment problem is in a serious state.

General technology for treating food waste is mainly a method of separating the leachate from food waste in a water collecting tank, drying the solid at high heat, grinding it and using it to prepare livestock feed, or fermenting it with a microorganism to produce compost to turn food waste into resources, thereby treating it. However, this method also takes a lot of energy and requires expensive facilities when developing food waste as feed, which causes economic problems and the quality of feed is poor, so livestock farmers avoid it. Compost also requires a lot of effort to commercialize it because the technology to treat salts has not been developed, so when salts pollute the soil and are fermented with a microorganism, a large working space and a long processing time are required.

Granted patents No. 10-1161670 (June 26, 2012) and No. 10-1529832 (June 11, 2015) relate to a mixed strain which grows rapidly in various temperature, pH and salinity ranges, and has a high decomposition rate for cellulose, amylose, protein and fat, and a method for treatment of food waste therethrough, and
granted patent No. 10-1761321 (July 19, 2017) describes an enzyme composition for treatment of food waste in which amylase, cellulase, lipase and the like are mixed.

### DISCLOSURE

### TECHNICAL PROBLEM

Accordingly, the present inventor has completed the invention related to a method for producing animal feed directly by reducing time and reducing odor through a composite formulation composed of digestive enzymes as well as increasing the yield and lowering salinity after continuous research.

An object of the present invention is to provide a method for treating food waste using a decomposition composite formulation composed of digestive enzymes.

In addition, another object of the present invention is to provide a method for preparation of a composition for animal feed by adding an excipient to decomposed food waste using the decomposition composite formulation.

Furthermore, other object of the present invention is to provide a composition for animal feed prepared by the method.

### TECHNICAL SOLUTION

The present invention provides a method for treatment of food waste, comprising pulverizing food waste using a mixer while transferring it to a pump after putting it in a water tank; injecting the pulverized food waste into a tank and then administering a decomposition composite formulation comprising amylase, protease, viscozyme, cellulase and alkylase and fungamyl enzyme; performing enzyme decomposition by heat-treating the tank in which the decomposition composite formulation is added at a temperature of 50 - 60 °C for 1 - 3 hours; sterilizing the enzymatically decomposed food waste at a temperature of 90 - 110 °C for 20 - 60 minutes; operating concentration of removing moisture from the liquid food waste sterilized using a vacuum concentrator; and injecting the concentrated food waste in a vacuum drier and drying.

In addition, the present invention provides a method for preparation of a composition for animal feed, comprising pulverizing food waste using a mixer while transferring it to a pump after putting it in a water tank; injecting the pulverized food waste into a tank and then administering a decomposition composite formulation comprising amylase, protease, viscozyme, cellulase and alkylase and fungamyl enzyme; performing enzyme decomposition by heat-treating the tank in which the decomposition composite formulation is added at a temperature of 50 - 60 °C for 1 - 3 hours; sterilizing the enzymatically decomposed food waste at a temperature of 90 - 110 °C for 20 - 60 minutes; operating concentration of removing moisture from the liquid food waste sterilized using a vacuum concentrator; injecting the concentrated food waste in a vacuum drier and drying; and measuring the salinity of the treated food waste decomposed and then adding an auxiliary solvent.

Furthermore, the present invention provides a composition for animal feed prepared by the method.

### ADVANTAGEOUS EFFETS

The method for treatment of food waste according to the present invention can rapidly process large-capacity food waste.

In addition, the yield of food waste treatment is high, odor is reduced, and treated food waste which may only be used as compost, has an excellent effect that it can be used as animal feed by adding an auxiliary solvent.

### BRIEF DESCRIPTION OF THE DRAWINGS

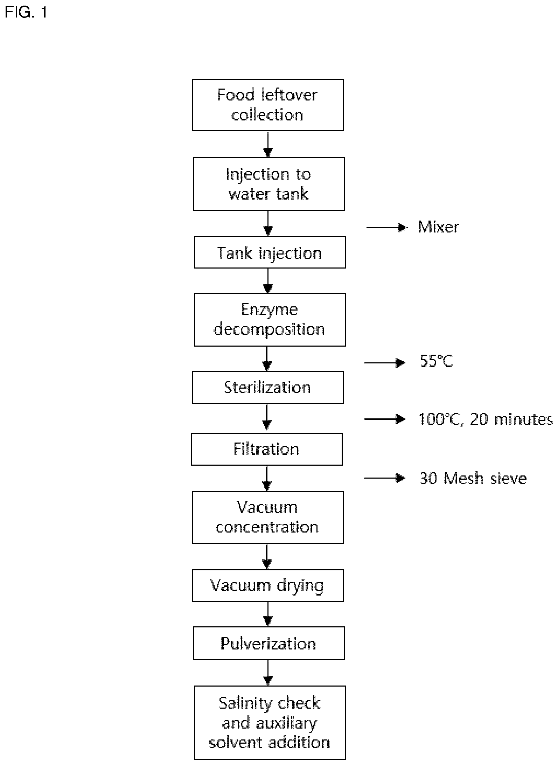

FIG. 1 shows a block diagram showing the steps of treating food waste and preparing animal feed according to the present invention.

### MODE FOR INVENTION

Hereinafter, the present invention will be described in more detail by examples. These examples are intended only to illustrate the present invention more specifically, and it is obvious to those skilled in the art that the scope of the present invention is not limited by these examples according to the gist of the present invention.

The present invention is composed of a method for treatment of food waste, comprising pulverizing food waste using a mixer while transferring it to a pump after putting it in a water tank; injecting the pulverized food waste into a tank and then administering a decomposition composite formulation comprising amylase, protease, viscozyme, cellulase and alkylase and fungamyl enzyme; performing enzyme decomposition by heat-treating the tank in which the decomposition composite formulation is added at a temperature of 50 - 60 °C for 1 - 3 hours; sterilizing the enzymatically decomposed food waste at a temperature of 90 - 110 °C for 20 - 60 minutes; operating concentration of removing moisture from the liquid food waste sterilized using a vacuum concentrator; and injecting the concentrated food waste in a vacuum drier and drying.

The method relates to a method for treatment of food waste using a composite formulation comprising digestive enzymes as an active ingredient. As the digestive enzymes act at a room temperature and atmospheric pressure, they are economical with low risk and no intermediates are produced in the reaction process, and thus it is an environmentally friendly method, and it is an economical and environmentally friendly method with low risk when applied to food waste.

In the step, the total used weight (g) of the decomposition composite formulation may be 0.02 - 0.06%(g/g) based on the food waste weight (g), and preferably, it may be 0.04%(g/g), but not limited thereto.

In the step, the total used weight (g) of the decomposition composite formulation may be amylase 100g, protease 100g, cellulase 125g, lipase 125g, citric acid lyase 30g, glutamic acid lyase 30g, viscozyme 30g, alkylase 220g and fungamyl enzyme 22g, based on food waste 2500 kg, but not limited thereto.

In addition, the present invention is composed of a method for preparation of a composition for animal feed, further comprising adding an auxiliary solvent after measuring the salinity of the treated food waste treated using the method.

The auxiliary solvent is edible, and preferably, it includes starch, corn flower and dextrin, but not limited thereto.

Then, in measurement of the salinity, when the salinity is higher than the concentration of 10%(g/g), it may be lowered to 10%(g/g) or less by adding an auxiliary solvent.

In addition, the present invention is composed of a composition for animal feed prepared by the method.

When the composition is prepared as a composition for animal feed, it may be processed using the composition prepared by the method, an additive may be added by a general method for preparation of feed thereto. The feed composition may further comprise any one or one or more among organic acids such as citric acid, fumaric acid, adipic acid, lactic acid, malic acid, and the like, phosphates such as sodium phosphate, potassium phosphate, acidic pyrophosphate, polyphosphate, and the like, or natural antioxidants such as polyphenol, catechin, alpha-tocopherol, rosemary extract, vitamin C, green tea extract, licorice extract, chitosan, tannic acid, phytic acid, and the like. When prepared as feed, the composition may be formulated in a common feed form, and it may comprise a common feed component together.

The feed composition may further comprise grain, for example, crushed or pulverized wheat, oats, barley, corn and rice; vegetable protein feed, for example, feed comprising rape, bean and sunflower as a main component; animal protein feed, for example, powdered blood, powdered meat, powdered bones and powdered fish; sugar and dairy products, for example, dry ingredients consisting of various kinds of powdered milk and whey powder, and the like, and in addition thereto, it may further comprise a nutritional supplement, a digestion and absorption enhancer, a growth promoter, and the like.

Furthermore, the feed composition may contain an adjuvant, for example, a preservative, a stabilizer, a wetting agent or an emulsifier, and a solution promoter, and the like.

The feed or feed additive of the present invention may be applied to a diet for many animals comprising mammals, poultry and fish.

As the mammal, it may be used for pigs, cattle, sheep, goats, laboratory rodents, and laboratory rodents, as well as pets (e.g., dogs, cats) and the like, and as the poultry, it may be used for chickens, turkeys, ducts, geese, pheasants and quail, and the like, and as the fish, it may be used for trout, and the like, but not limited thereto.

### Example 1. Decomposition of food waste using decomposition composite formulation

Collected food waste 2.5kg was injected into a water tank. After stored in the water tank, it was pulverized using a mixer while transferring it to a pump. The pulverized food waste was injected to a 5-ton tank for enzymatic decomposition. After heating the tank to raise the tank temperature to 50 - 60 °C, a decomposition composite formulation composed of digestive enzymes was administered. A total of 1000g of the decomposition composite formulation consisting of amylase 100g, protease 100g, cellulase 125g, lipase 125g, citric acid lyase 30g, glutamic acid lyase 30g, viscozyme 30g, alkylase 220g and fungamyl enzyme 220g was administered. The fungamyl enzyme was used by purchasing a Fungamyl 800L product. After administering the decomposition composite formulation, it was heated and sterilized at 100°C for 3 hours. While moving the treated liquid phase to a concentrator, animal bones, fish bones and other foreign substances were filtered out. The liquid phase in which foreign substances were filtered was moved to a vacuum concentrator to remove moisture up to 65 - 70% of the solid content. Food waste decomposition was completed by completely drying the treated portion in which the moisture was removed using a vacuum drier.

### Example 2. Preparation of composition for feed using decomposed food waste

The treated food waste in which decomposition was completed in the step was put into a grinder and pulverized, and then the salinity was confirmed. After confirming the salinity, when the weight concentration was higher than 10%(g/g), corn flour was added and mixed, and the salinity was lowered to 10%(g/g) or less to prepare a composition for animal feed.

### Test example 1. Decomposition yield according to ratio of digestive enzymes

By adjusting the injection ratio of viscozyme, alkylase and fungamyl enzyme, among amylase, protease, cellulase, lipase, citric acid lyase, glutamic acid lyase, viscozyme, alkylase and fungamyl enzyme, the decomposition yield of food waste was compared. The composition yield (%) is a ratio value obtained by subtracting the residual weight after decomposition and then concentration and drying, compared to the initial weight of the food waste. The composition weight (g) of each digestive enzyme was composed as Table 1 below to treat the food waste. The detailed treatment method was as shown in Example 1 above.

**[Table 1]**

| Digestive enzyme | Composition weight (g) | | | | |
|---|---|---|---|---|---|
| | Example 1 | Example 2 | Example 3 | Example 4 | Example 5 |
| Amylase | 100 | 100 | 100 | 100 | 125 |
| Protease | 100 | 100 | 100 | 100 | 125 |
| Cellulase | 125 | 125 | 125 | 125 | 125 |
| Lipase | 125 | 125 | 125 | 125 | 125 |
| Citric acid lyase | 30 | 30 | 30 | 30 | 100 |
| Glutamic acid lyase | 50 | 50 | 50 | 50 | 100 |
| Viscozyme | 30 | 0 | 30 | 0 | 100 |
| Alkylase | 220 | 0 | 0 | 220 | 100 |
| Fungamyl | 220 | 0 | 0 | 220 | 100 |

The result of measuring the decomposition yield as composed above was shown in Table 2 below.

**Table 2**

| Classification | Decomposition yield (%) | | | |
|---|---|---|---|---|
| | 30 minutes passed | 1 hour passed | 2 hours passed | 3 hours passed |
| Example 1 | 50.6 | 80.5 | 88.2 | 94.6 |
| Example 2 | 40.5 | 62.2 | 68.7 | 72.2 |
| Example 3 | 42.3 | 65.4 | 70.6 | 75.8 |
| Example 4 | 46.8 | 74.5 | 80.4 | 82.5 |
| Example 5 | 45.2 | 75.0 | 83.5 | 86.8 |

As shown in Table 2, when the decomposition composite formulation was composed of amylase 100g, protease 100g, cellulase 125g, lipase 125g, citric acid lyase 30g, glutamic acid lyase 30g, viscozyme 30g, alkylase 220g and fungamyl enzyme 220g, it was confirmed that the most excellent decomposition yield (94.6%) was shown. This is a quantitatively significant effect compared to 82.5%, 75.8% and 72.2%, which are the decomposition yields of the decomposition composite formulations without adding viscozyme, alkylase or fungamyl enzyme, and thus it can be seen that the difference is large according to the ratio of 9 components.

So far, the invention made by the present inventor has been described in detail according to the above examples. However, the examples are only to illustrate the content of the present invention, and the scope of the present invention is not limited by the examples, and it should be understood that it may be changed within the range without departing from the gist of the invention by those skilled in the art.

## Claims

1. A method for treatment of food waste, comprising
(a) pulverizing food waste using a mixer while transferring it to a pump after putting it in a water tank;
(b) injecting the pulverized food waste into a tank and then administering a decomposition composite formulation comprising amylase, protease, viscozyme, cellulase and alkylase and fungamyl enzyme;
(c) performing enzyme decomposition by heat-treating the tank in which the decomposition composite formulation is added at a temperature of 50 - 60 °C for 1 - 3 hours;
(d) sterilizing the enzymatically decomposed food waste at a temperature of 90 - 110 °C for 20 - 60 minutes;
(e) operating concentration of removing moisture from the liquid food waste sterilized in the step (d) using a vacuum concentrator; and
(f) injecting the concentrated food waste in a vacuum drier and drying.

2. The method for treatment of food waste according to claim 1, wherein the total used weight (g) of the decomposition composite formulation of the step (b) is a weight of 0.4%(g/g) based on the weight (g) of the food waste.

3. The method for treatment of food waste according to claim 1, wherein the total used weight (g) of the decomposition composite formulation of the step (b) consists of amylase 100g, protease 100g, cellulase 125g, lipase 125g, citric acid lyase 30g, glutamic acid lyase 30g, viscozyme 30g, alkylase 220g and fungamyl enzyme 22g, based on food waste 2500 kg.

4. A method for preparation of a composition for animal feed, comprising
(a) pulverizing food waste using a mixer while transferring it to a pump after putting it in a water tank;
(b) injecting the pulverized food waste into a tank and then administering a decomposition composite formulation comprising amylase, protease, viscozyme, cellulase and alkylase and fungamyl enzyme;
(c) performing enzyme decomposition by heat-treating the tank in which the decomposition composite formulation is added at a temperature of 50 - 60 °C for 1 - 3 hours;
(d) sterilizing the enzymatically decomposed food waste at a temperature of 90 - 110 °C for 20 - 60 minutes;
(e) operating concentration of removing moisture from the liquid food waste sterilized in the step (d) using a vacuum concentrator;
(f) injecting the concentrated food waste in a vacuum drier and drying; and
(g) measuring the salinity of the treated food waste decomposed in the step (f) and then adding an auxiliary solvent.

5. The method for preparation of a composition for animal feed according to claim 4, wherein the total used weight (g) of the decomposition composite formulation of the step (b) consists of amylase 100g, protease 100g, cellulase 125g, lipase 125g, citric acid lyase 30g, glutamic acid lyase 30g, viscozyme 30g, alkylase 220g and fungamyl enzyme 22g, based on food waste 2500 kg.

6. The method for preparation of a composition for animal feed according to claim 4, wherein an auxiliary solvent is added, when the salinity measured in the step (f) is 10%(g/g) or more based on the total weight.

7. A composition for animal feed prepared by the method of claim 4 to claim 6.
